# EUROPEAN PATENT APPLICATION

(11) **EP 2 275 358 A2**
(43) Date of publication of application: **19.01.2011**
(21) Application number: 10169604.5
(22) Date of filing: 15.07.2010
(51) Int. Cl.: B65D 43/16, B29C 65/02, B29C 65/48, B29C 65/58, B29C 65/78, B29L 31/22, B29C 65/08, B29C 65/16

(54) **A process and plant for obtaining a container body particurlarly suitable for packaging food products**

(30) Priority: 17.07.2009 IT VR20090110
(71) Applicant: ISAP Packaging S.P.A., 37124 Parona - Verona (VR) (IT)
(72) Inventor: Simonazzi, Daniele, 42049, Sant'Ilario d'Enza - RE (IT)
(74) Representative: Reniero, Cirillo Silvano

(57) **Abstract**

A process for obtaining a tub with overturnable cover, particularly for packaging food products, comprising the following operating steps:
- prearranging at least one container body obtained from a first laminar material, and having at least one side wall with a flanged edge provided with at least one appendage or lip;
- prearranging at least one cover body obtained from a second laminar material and having a shape complementary to that of the at least one container body, the cover body being provided with at least one appendage or lip on an externally flanged end thereof; and
- permanently connecting at least one section of the at least appendage one or lip of the at least one container body with at least one section of a respective appendage or lip of the cover body

## Description

The present invention regards a process and a plant for obtaining a container body for food use, as well as a container body thus obtained.

Container bodies for foods are widely used, the so-called tubs or the like, comprised of a container body integral with (i.e. obtained in a single piece with) a cover typically by means of a thermoforming process starting from a sheet or tape ("foil" in jargon) of moldable plastic material.

One such container body obtained via thermoforming can have different cross section configurations, e.g. circular or polygonal, with bordered side wall(s). The container body, at the, or at an upper peripheral wall thereof has a tongue-like extension for connecting with a respective closure cover. The connection tongue is shaped as a hinge, generally with double articulation fold, so that, at such connection tongue, the cover can complete an angular displacement usually greater than 180°; and thus, the cover can be overturned between a closed position atop the container body and a completely open position on the side of the container body. The cover can be removably locked in closed position on the container body by means of suitable complementary engagement means, e. g. snap means, provided at respective edges. In order to obtain the conventional tubs with cover, an amount of plastic material is used which is greater than that strictly necessary, which means that there is a waste of plastic material. This occurs since, in order to ensure suitable mechanical strength characteristics with regard to the various stresses that can affect the container body during its normal use, the initial foil or sheet of moldable plastic material must have a predetermined thickness. Such thickness becomes thinned during the thermoforming process and is thus selected so as to be suitable for the container body, but is normally considerably oversized for the cover. Indeed, the cover is not subjected, during the thermoforming process, to the same thickness reduction of the container body, since its own thermoforming mold has a thermoforming seat or impression with roughly the same bulk as that of its own container body, but with much inferior depth with respect thereto. The material of the cover, therefore, undergoes a thinning that is correspondingly more reduced, given the same material employed for obtaining the same.

Another limit of the conventional tubs with cover lies in the fact that they are mainly monochromatic, i.e. with container and cover mainly of the same color.

It would be desirable, however, to be able to use tubs with overturnable cover in which the cover can have material and/or color different from that of the tub body, if only for differentiating the product packaged in the tubs according to the color and for reducing the quantity of plastic material employed for producing the covers of the tubs.

Conventional tubs are also generally provided with a plurality of ventilation openings formed in the cover and the container body, so that, when the tub is in its closed position, air can flow therethrough for ventilating food products in the tub. A ventilation gap is also generally delimited between the edges of the cover and container body.

Another drawback of conventional tubs is that the cover on the container body becomes often deformed, e. g. by gravity, particularly at the hinge-like connection tongue, which hinders proper ventilation of food products stored therein.

It is known in the art a container body and a cover permanently connected with each other so as to form a tub with an overturnable cover. Tubs of this kind have a number of inconveniences.

In FR-2 731 412, for example, a tub is disclosed which comprises a container body having a flange at its upper peripheral wall, for connection with a closure cover. The closure cover is formed with a hinge-like flange which is quite complex to manufacture and to handle for being assembled with the container body. The process for assembling such a hinge-like flange with the flange of the container body requires at least eight steps in sequence, three of which simply for overturning the closure cover. Furthermore, the plant for carrying out such process involves at least eight work stations, where a number (three) of jacks are to be provided in order to correctly position the closure cover on the container body.

In US 2004/63557 a method is disclosed of making a one-piece lidded container starting from a first and a second length of thermoplastic material, e. g. both having different properties such as thickness, color, barrier features, etc.. A portion of the first length is brought into an overlapping or abutting orientation with a portion of the second length to provide a juncture of thermoplastic material. The first and the second lengths thus arranged are secured to one another and then the one-piece assembly thus formed is subjected to a (thermo)forming process, thereby obtaining a container body and a respective lid integral therewith. Such a method has the inconvenience that, in practice, it is difficult to maintain a correct positioning of the two lengths of thermoplastic material while transferring them to a forming press. Moreover, after the forming process, the one-piece lidded container thus obtained must be cut away from the two starting lengths of thermoplastic material, and should the two lengths be made of different materials or the same material but of different color, the waste portions of thermoplastic material being made of materials having different properties, should be first separated from one another, which is a difficult and quite expensive operation. Should the waste portion made of materials having different properties not be separated and reused, e.g. to form other one-piece lidded containers as taught in US 2004/63557, then the reused material and the containers obtained therefrom would be of lower grade quality, and would have a much lower economic value.

GB-1 127 921 also teaches a process for producing a box or packet having two parts permanently secured to one another by applying heat and pressure to the flanges of two parts of the box or packet to obtain a hinge formation therebetween. This process suffers from the inconvenience that it is limited to foamed plastic materials only, and the permanent connection of the two parts is obtainable only when materials having a thickness greater than that of the majority of plastic materials normally employed in food packaging are involved.

US-3 393 444 teaches a method of assembling plastic boxes, normally mould injected, formed by mechanical coupling two sections. This method is applicable when box sections having hinges of the ball and socket or snapping in type are used, and cannot be easily applied to two sections of thermoformed plastic laminar material as the hinges other than of the ball and socket or snapping in type would be unstable, and thus would easily become disconnected.

Accordingly, the main object of the present invention is that of providing a process and a plant for producing a tub with an overturnable cover which allow optimizing the use of moldable plastic material.

Another object of the present invention is that of providing a process and a plant for producing a tub with an overturnable cover in which the cover and container are, in use, integral with each other but are obtained starting from a different type of foil or sheet, at least with regard to thickness and/or color or colors and/or materials.

Still another object of the present invention is to provide a process and a plant for producing a tub with an overturnable cover material where the waste material can be advantageously recycled in an easy way.

Another object of the present invention is that of providing a process for producing a tub with an overturnable cover which can be easily implemented and that enhances ventilation of food products stored therein.

Not least object of the present invention is to provide a plant for producing a tub with an overturnable cover involving a very small number of work stations.

According to a first aspect of the present invention, there is provided a process for obtaining a tub with overturnable cover, particularly for packaging food products, comprising the following operating steps:
- prearranging at least one container body obtained from a first laminar material, and having at least one side wall with a flanged edge provided with at least one appendage or lip;
- prearranging at least one cover body obtained from a second laminar material and having a shape complementary to that of said at least one container body, said cover body being provided with at least one appendage or lip on an externally flanged end thereof; and
- permanently connecting at least one section of said at least appendage or lip of said at least one container body with at least one section of a respective appendage or lip of said cover body.

According to another aspect of the present invention, there is provided a plant for obtaining a tub with an overturnable cover, particularly for packaging food products, according to the above described process, comprising:
- first support means for at least one container body or cover body,
- second support means for at least one cover body or container tub body,
- said first and second support means being designed to be arranged, in use, so as to bring at least one section of said at least one appendage or lip of said container body close to a respective section of said at least appendage or lip of said cover body, and
- permanent connection means between at least one section of said at least one appendage or lip of said at least one container body with said respective section of said at least one appendage or lip of said cover body.

Further aspects and advantages of the present invention will become clearer from the following detailed description of several currently preferred embodiments thereof, illustrated merely by way of non-limiting examples in the accompanying drawings, in which:
Figure 1 illustrates a slightly top perspective view of a container body or tub and a respective cover therefor before their permanent assembly according to the process of the present invention;
Figure 2 illustrates a schematic plan view of a first embodiment of a plant for carrying out the process according to the present invention;
Figure 3 shows a diagrammatic plan view of a second embodiment of a plant for carrying out the process according to the present invention;
Figure 4a illustrates a plan view of an enlarged scale detail of the plant of Fig. 3;
Figure 4b shows a slightly top perspective view of the plant of Fig. 4 viewed rotated through 90° in counter-clockwise sense;
Figures 5a and 5b each illustrate a side view of an actuator group for loading covers or tubs, in two different work steps;
Figures 6a - 6f show different loading steps of a cover or a tub in a respective annular reception seat;
Figures 7a and 7b illustrate a partial cross section view of an assembly station during the execution of a correct installation operation through a pressure element;
Figures 7c and 7e each show a cross section view of the assembly station during the execution of a permanent ultrasound connection operation between one appendage of a container body and that of its respective cover according to a first embodiment of the process of the present invention;
Figures 7d and 7f illustrate enlarged scale details of Figure 7c and Figure 7e, respectively;
Figures 8a and 8c illustrate two cross section views of the assembly station, during the execution of a permanent laser connection operation between a container body and its respective cover according to a second embodiment of the present invention;
Figures 8b and 8d illustrate enlarged scale details of Figure 8a and Figure 8c, respectively;
Figures 9a and 9c illustrate two cross section views of the assembly station of the plant according to the present invention, during the execution of a permanent connection operation between a container body and its respective cover according to a modification of the second embodiment of the process of the present invention;
Figures 9b and 9d show enlarged scale details of Figure 9a and Figure 9c, respectively;
Figures 10a - 10c illustrate three different permanent connection types between container body and cover according to the process of the present invention;
Figures 11a and 11b show two different plan views of tubs with overturnable cover, obtainable with the process of the present invention;
Figure 12a illustrates a partial plan view of a container body and its respective cover designed to be permanently connected together according to a third embodiment of the process of the present invention;
Figure 12b shows a cross section view of a template jig or frame for housing and supporting the tub body and its respective cover during the assembly step;
Figure 12c is a partial plan view of the frame of Figure 12b;
Figures 12d - 12f respectively show a tub with overturnable cover permanently connected to the tub body as illustrated in Fig. 12a and two cross section views of the same taken along the lines B-B and A-A, respectively, of Fig. 12d;
Figure 13a illustrates a partial plan view of a container body and respective cover, disassembled and with a circular cross section;
Figure 13b is a front elevation of the container body and the cover of Fig. 13a;
Figure 13c is partial plan view of the container body and the cover of Figure 13b;
Figures 13d and 13e respectively show a plan view of a tub of Fig. 13c with overturned cover and a front elevation view of the same tub when closed;
Figure 14a illustrates a partial plan view of a container body and its respective cover having a substantially rectangular cross section and designed to be assembled and permanently connected to each other according to a third embodiment of the process of the present invention;
Figure 14b is a partial plan view of the container and cover of Figure 14a having respective connection elements superimposed on each other;
Figures 14c to 14e show a side view, a rear view and a front view, respectively, of a closed tub obtained by permanently connecting together the container body and the cover of Fig. 14a;
Figure 15a illustrates a side view partly in cross section of a container body and its respective cover having connection elements in the process of being superimposed on each other, in order to be mechanically coupled in a permanent manner according to another embodiment of the process of the present invention;
Figures 15b and 15c show a respective cross section view of a housing and alignment jig of the container body and cover of Fig. 15a during and after the permanent connection operation of the body and cover;
Figures 15d and 15e illustrate the tub of Figs. 15b and 15c in open position with overturned cover and closed cover, respectively;
Figures 16a to 16e illustrate another variant of permanent mechanical coupling between the container body and its respective cover according to a third embodiment of the process of the present invention;
Figures 17a to 17e show five cross section views of a further variant of permanent mechanical coupling between the container body and its respective cover according to a third embodiment of the process of the present invention;
Figures 18a to 18c are cross section views of a container body and respective cover permanently snap-connectable with each other;
Figures 19a and 19b illustrate, in cross section, a container body and respective cover which are permanently connectable via gluing;
Figures 20a to 20e show 5 cross section views of a further variant of permanent mechanical coupling between the container body and its respective cover according to a third embodiment of the process of the present invention;
Figures 21a is a front view of a tub with overturnable cover permanently connected to its container body according to the invention; and
Figures 21b to 21d, show each a different cross section view taken along the lines A-A, B-B and C-C, respectively, of Fig. 21a to illustrate three different variations of the tub.

In the accompanying drawings, equivalent or similar parts or components were marked with the same reference numerals.

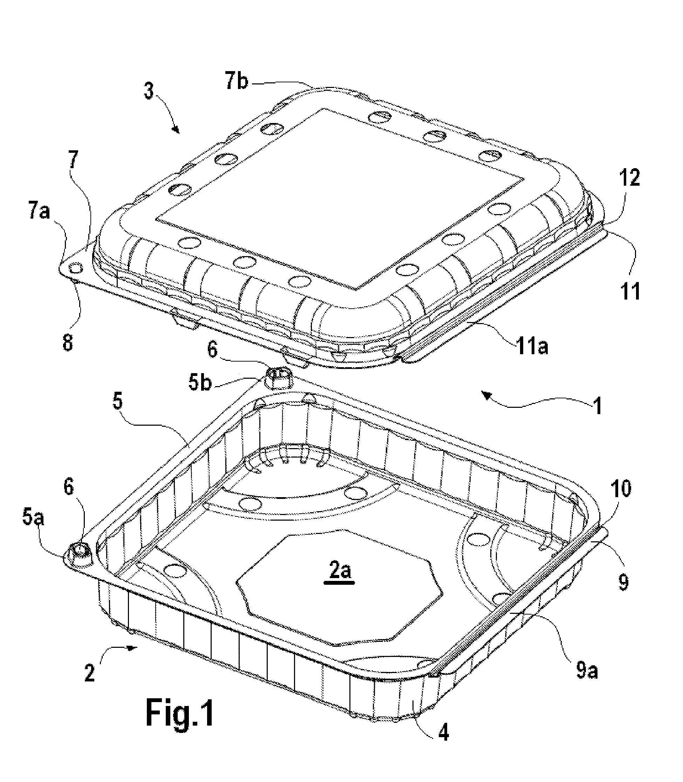

First, with reference to Figure 1, it will be noted that a tub 1 obtainable according to the process of the present invention is comprised of a container body 2 and a cover 3 that can be variously shaped in cross section, and are made separately, e.g. via thermoforming, from materials with different characteristics, typically with different color and thickness.

The container body 2, as is normally the case, has a bottom wall 2a from which one or more side walls 4 rise which are provided at their top with a peripheral wall 5, flanged outwardly. On the flanged edge, engagement elements 6 are preferably provided for, for the removable retention of the cover 3, when in its closed position; such elements 6 are configured, e. g. as a female or hollow relief. The engagement elements 6 are provided for, e.g. on a same front of the container element, typically at two adjacent corners 5a, 5b of the flanged edge 5.

In the embodiment of Figure 1, the rear of the container body 2 has an appendage or lip 9 which is outwardly extended from the flanged edge 5 and preferably delimits a longitudinal grooved projection10 substantially extended over its entire length, and terminating on the exterior with a flat portion 9a.

The cover 3 is preferably hollow and configured as a container body 2, and has an externally flanged edge 7 as well as respective removable engagement elements 8, e.g. configured as insertable/disconnectable protuberances, arranged on a same side (front or rear), typically at two adjacent corners 7a and 7b, and designed to be engaged with, or disengaged from a respective female or hollow relief 6 of the container body 2. As illustrated in the embodiment of Figure 1, on the opposite side with respect to the engagement elements 8, the flanged peripheral edge 7 of the cover 3 has an appendage or lip 11 which is externally extended therefrom and is preferably co-extended with the appendage or lip 9 and delimits a longitudinal grooved projection 12 substantially extended over its entire length, and terminating with a flat portion 11a.

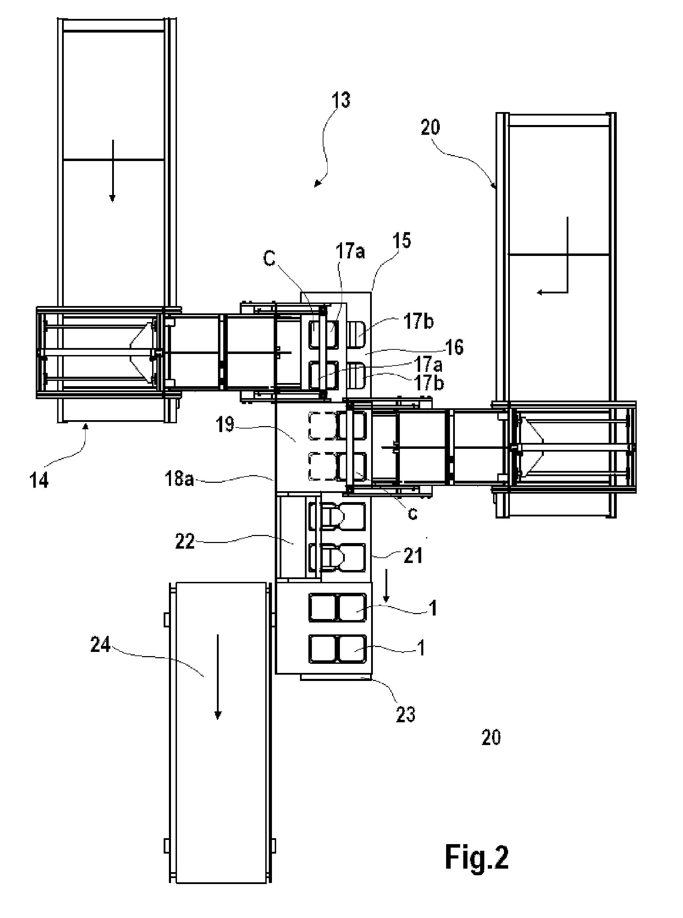

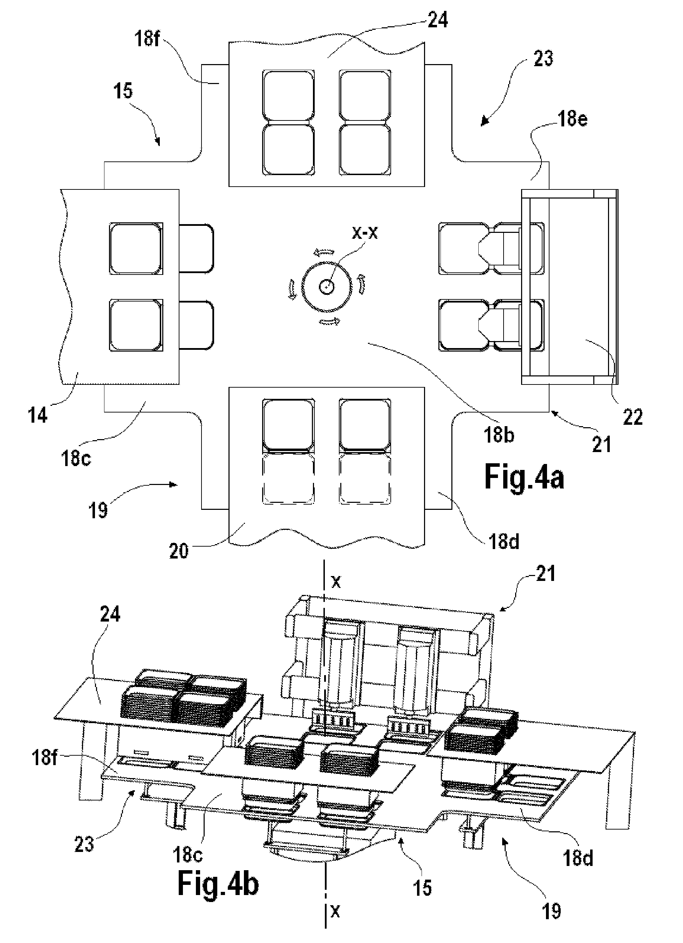

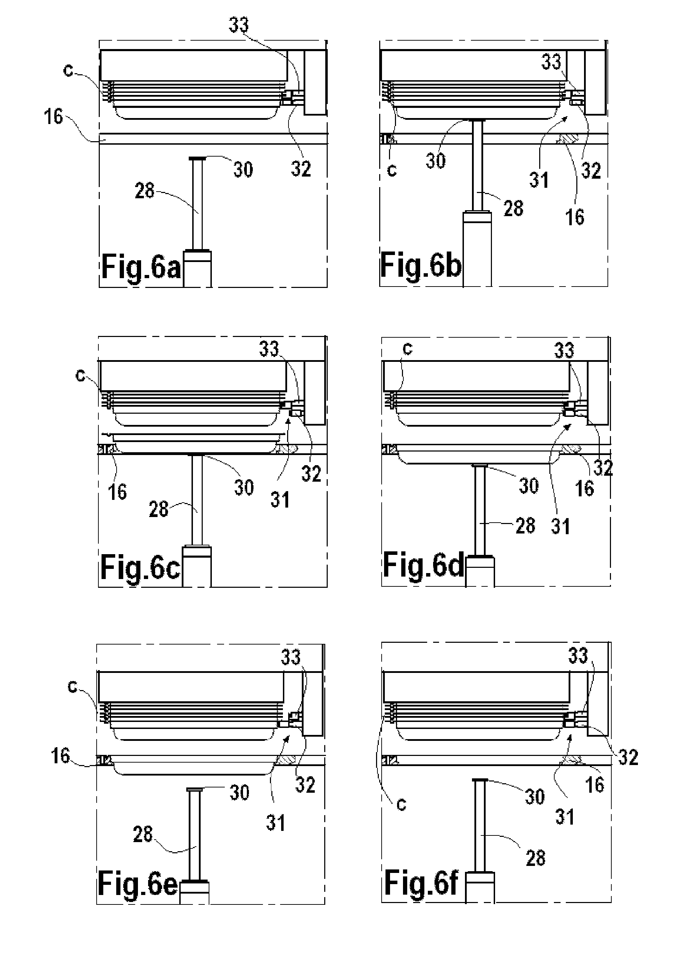

In Figures 2 to 6f, a plant 13 is schematically illustrated for the assembly and permanent connection of a container body 2 and a respective cover 3. More particularly, the plant 13 illustrated in Figure 2 constitutes a first plant embodiment according to the present invention and is formed by an unstacking group 14 of any suitable type suitable for feeding, e. g. one pair of container bodies 2 at a time in order to load such pair onto a loading jig 16 at a container body loading station 15. The jig 16 has one or more pairs of annular impressions with through openings 17a, each being prearranged for housing a container body and being flanked at a pre-established distance from a respective impression 17b prearranged for housing a respective cover 3.

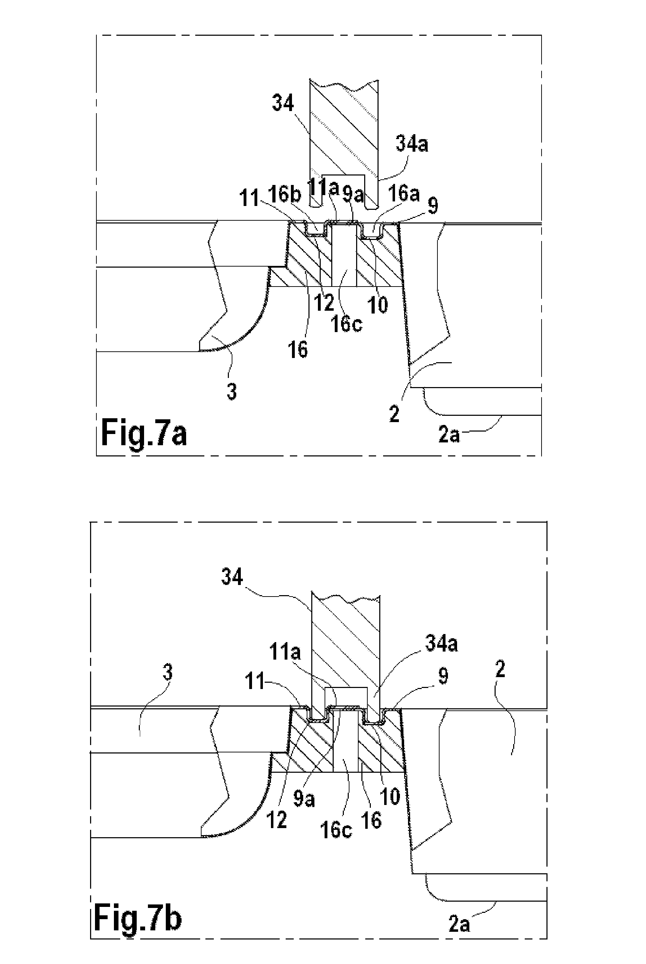

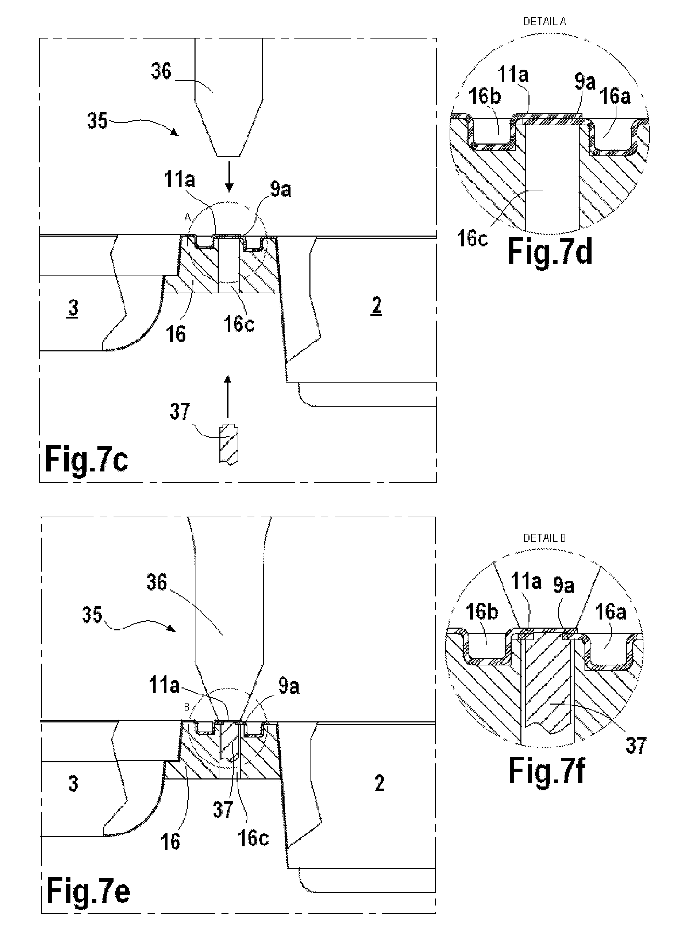

The container bodies 2 and the covers 3 are supported by the template or jig 16 at their flanged edges 5 and 7. As is better illustrated in Fig. 7a, the jig 16 in the section comprised between each pair of openings 17a and 17b has two parallel recesses or slots 16a and 16b, close to the through openings 17a and 17b, respectively. The recess 16a is intended to house the grooved projection 10 of a container body, whereas the recess 16b is set to (accurately) receive the grooved projection 12 of its respective cover, so that the respective external portions 9a and 11a thereof are arranged in a horizontal, superimposed manner.

For such purpose, the jig 16, after a pair of container bodies 2 are loaded therein, is moved (in line in Fig. 2) by driving means of any suitable type into a cover loading station 19, for example in pairs, e.g. from a cover unstacking group 20 similar to that for the container bodies, as will be further explained below. At the cover loading station 19, a tub assembly operation is carried out in the sense illustrated above, since the portions 9a and 11a of each container body 2 and cover 3 are superimposed on a plane.

If desired, both the container bodies 2 and the covers 3 can be fed to the loading stations 15 and 19 coming directly from two respective thermoforming presses.

At the same cover loading station 19, or after having moved the jig 16 downstream to a work station 21, a permanent connection is made between the container body and cover by means of a suitable coupling group 22 designed to achieve permanent engagement between portions 9a and 11a. Downstream of the work station 21, the plant comprises an extraction and stacking station 23 for the tubs 1 now equipped with overturnable cover 3.

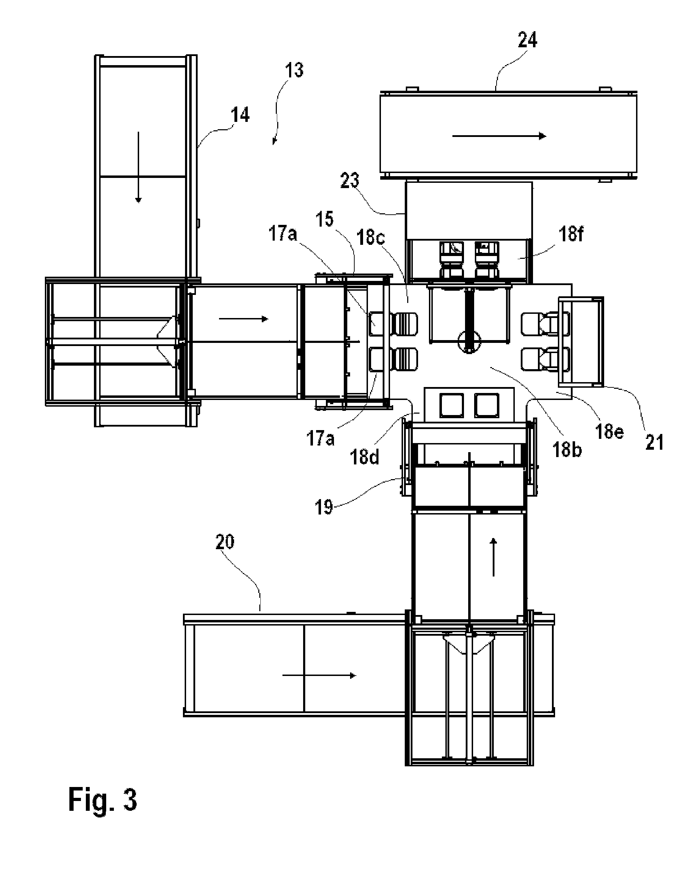

Figures 3 to 4b illustrate a second currently preferred embodiment of plant 13 for carrying out the process according to the present invention, in which the jigs 16 are moved by a carousel conveyor 18b with a constant pitch, e.g. of the type described in the patent IT-1 327 391. The carousel conveyor 18b has four spokes 18c, 18d, 18e and 18f, each arranged at right angles from the two adjacent, arranged to sequentially move close to the container loading station 15, the cover loading station 19, the work station 21 and the tub collection and stacking station 23, respectively.

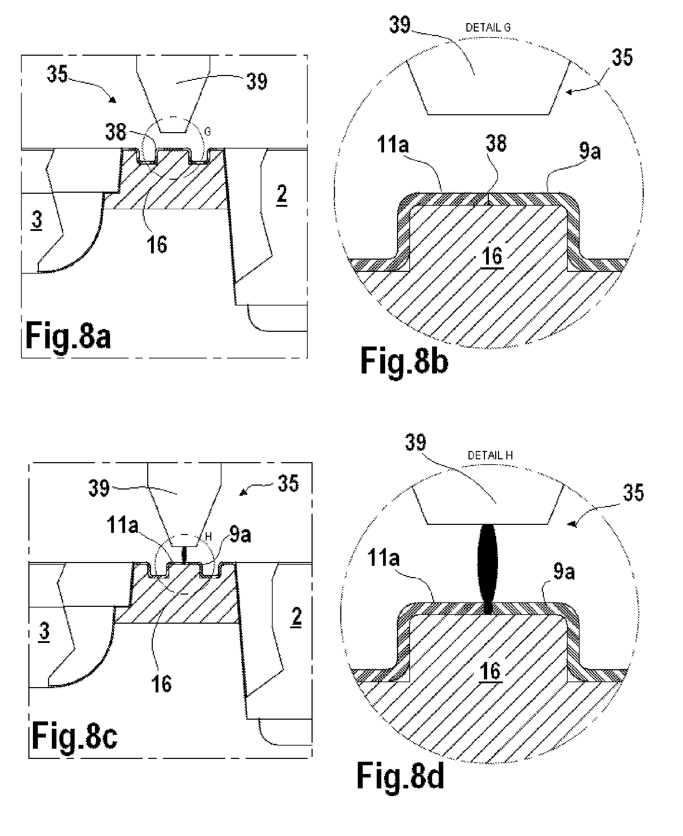

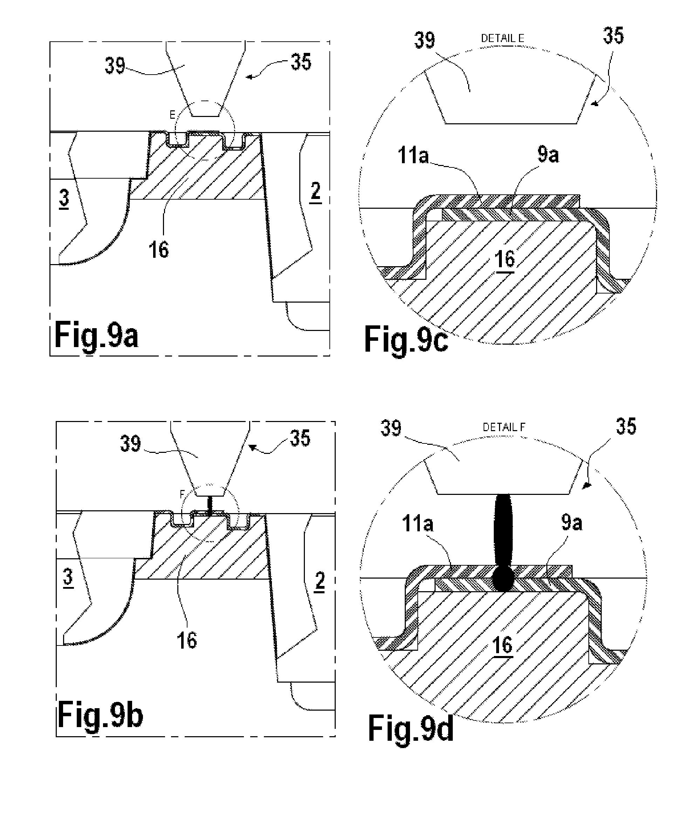

Each spoke 18c, 18d, 18e and 18f terminates with or supports a respective jig 16, the jigs preferably being arranged coplanar and at the same distance from the common vertical rotation axis x-x of the carousel conveyor 18b. The four spokes are preferably integral with a central plate, in turn supported for rotation by any suitable support (not illustrated in the drawings), and operatively connected with a suitable electric stepping motor. More particularly, the carousel conveyor 18b is intended to complete an angular travel of 90° with every passage, so that each jig 16 is sequentially moved between the various operating stations. The plant 13 according to this second embodiment provides for the loading of two containers 2 at a time onto the jig 16, present in that moment in the container loading station 15, at the two suitable through openings 17a. The respective covers 3, on the other hand, are loaded at the subsequent cover loading station 19 in the suitable through openings 17b of the same machine, thus attaining either the superimposition of the terminal portions 9a and 11a, as illustrated in Figs. 7a to 7f and 9a to 9d, or the mutual approaching of such portions, as shown in Figs. 8a to 8d.

In the subsequent work station 21, permanent coupling is achieved between containers 2 and respective covers 3 by mechanical engagement, as illustrated above or in any other suitable manner, as will be further explained below. Once the permanent connection is completed, the jig 16 is angularly moved into the extraction and stacking station 23 of the tubs 1 thus obtained for their subsequent removal from the plant.

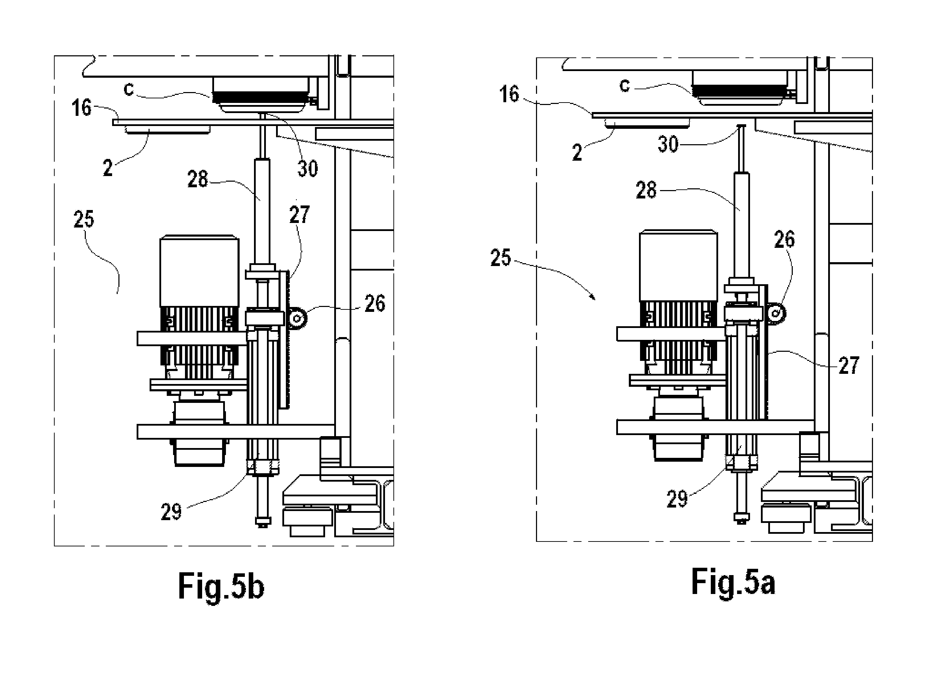

With reference to Figures 5a and 5b, a type of top loading means of container bodies 2 and covers 3 is illustrated in greater detail. These have been previously stacked and fed by a conveyor belt 20 (Figs. 2 and 3) to a higher level than the jigs 16 present on the carousel conveyor 18b. Such loading means are advantageously comprised of a linear actuator, e.g. by a reversible gearmotor group 25 of any suitable type set for actuating a pinion 26 and rack 27 device, the rack being supported by a vertical rod 28, preferably telescopic, in turn slidably supported by a guide frame 29 fixed to the fixed structure of the plant. Preferably, the rod 28 is tubular and terminates at the top thereof with a sucker 30, whereas its other end is in communication with a suitable vacuum source (not shown) with the interposition of a suitable control electric valve group, of any suitable type, controllable by a program control unit (not shown in the drawings) of the plant.

With this structure, every upward movement of the rack 27 will result in a corresponding upward lifting of the rod 28 which, by crossing through a through opening 17a or 17b of the jigs 16, will bring its own sucker 30 in contact with the bottom of a container body 2 or cover 3 (see Fig. 5b and 6b, in particular), thereby engaging it.

Once the bottom of a container body or a cover is engaged, the gearmotor group 25 will actuate the rod 28 to move backward towards the bottom, dragging with it downwards the container body or the cover thus engaged, so that they are located in the suitable housing seat in the underlying jig 16; after which, the valve control group will release the sucker, disengaging it from the container body or from the cover thus seated.

Figures 6a - 6b illustrate particular (currently preferred) retention and release means 31 provided in the loading stations 15 and 19. Such retention and release means can be actuated in a synchronized manner by the reversible gearmotor group 25 described above and are comprised of a pair of superimposed stems: lower 32 and upper 33, being horizontally extended at the bottom of a stack C of container bodies 2 or covers 3 and having one end thereof fixed to a respective actuator piston (not visible in the drawings) and the other work end intended to be engaged with the flanged edge of the last three bottom container bodies or covers of the stack. More particularly, the lower stem 32 is designed to be inserted, in use, under the edge of the bottom container body or cover of the stack. The upper stem 33 has its work end configured as a "comb" and is designed, in use, to engage the edge of the penultimate and third-to-last container body or cover 3 of the stack C. When the lower stem 32 is moved back, the bottom container body or cover in the stack is free to fall and be picked up by the sucker 30, whereas the rest of the container bodies or covers are sustained by the upper stem 33. Upon returning in its work or interception position, the upper stem 33 is caused to move back, so that the entire overlying stack is lowered until its bottom item abuts against the lower stem 32. The upper stem 33 is thus controlled to advance into work position to engage the penultimate and third-to-last object of the stack, as described above.

The synchronized actuation of the reversible gearmotor group 25, of the two stems 32 and 33 and of the actuation motor of the carousel conveyor 18b ensures that the rod 28 brings the sucker 30 to withdraw one item at a time from the stack C, bringing such item to be received in its housing seat 17a or 17b provided in the jig 16, where it remains supported at its own flanged edge 5 or 7.

Figures 7a and 7b illustrate an embodiment in which a container 2 and a cover 3, once installed in their respective housing seats 17a and 17b in the jig 16, have respective terminal portions 9a and 11a superimposed on each other. In order to ensure a correct superimposition of such portions, in addition to providing for the recesses 16a and 16b for housing a respective grooved projection 10 and 12 obtained in the respective appendages 9 and 11, a pressure element 34 is also preferably prearranged, e. g. in the work station 21; such pressure element being vertically translatable (Fig. 7b) owing to a suitable linear actuator (not visible in the drawings) and has its free end 34a shaped as a fork or an overturned channel. When the pressure element 34 is caused to translate downward, the two arms of the fork are inserted into the two recesses 16a and 16b of the underlying jig 16, thereby ensuring the correct positioning between container body and cover.

At this point, the jig 16 is transferred to the work station 21, where permanent coupling between the container and the cover is achieved. More particularly, in the work station 21, a coupler group 35 is provided for (e.g. see Figures 7c to 7f) of any suitable type, set, for example, to carry out a laser or ultrasound welding or a coupling of mechanical type.

In the case of use of an ultrasound welding coupler group (Figures 7c to 7f ), the work station 21 provides, for example, for a sonotrode 36 of any suitable type, mounted such that it is vertically translatable atop the underlying jig 16 and a suitable opposing element 37, also vertically translatable and arranged below the jig 16. The opposing element 37 is insertable/disconnectable in a through opening 16c in the jig 16, obtained at the contact or superimposition zone between the appendage 9 of a container body 2 and the appendage 11 of the respective cover 3, preferably between the recesses 16a and 16b, if provided.

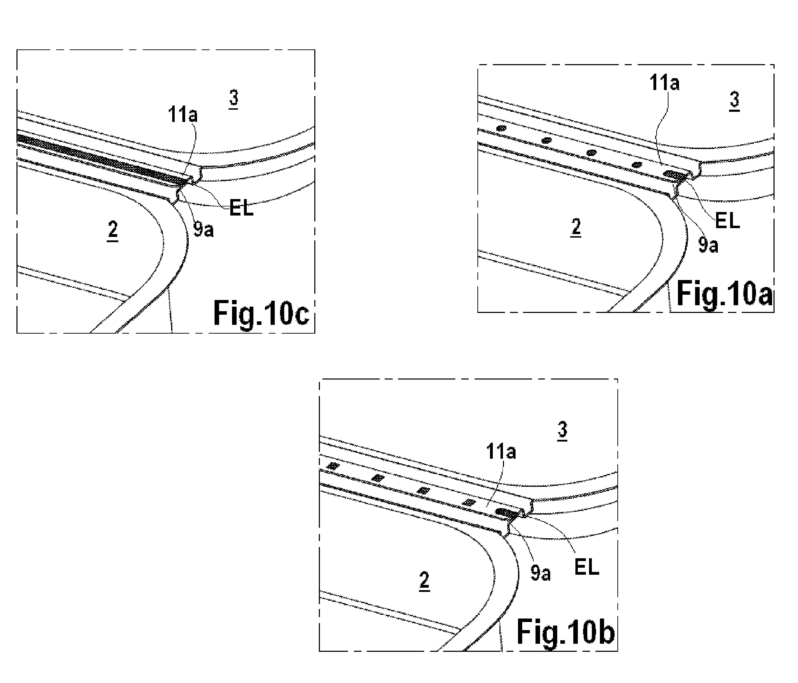

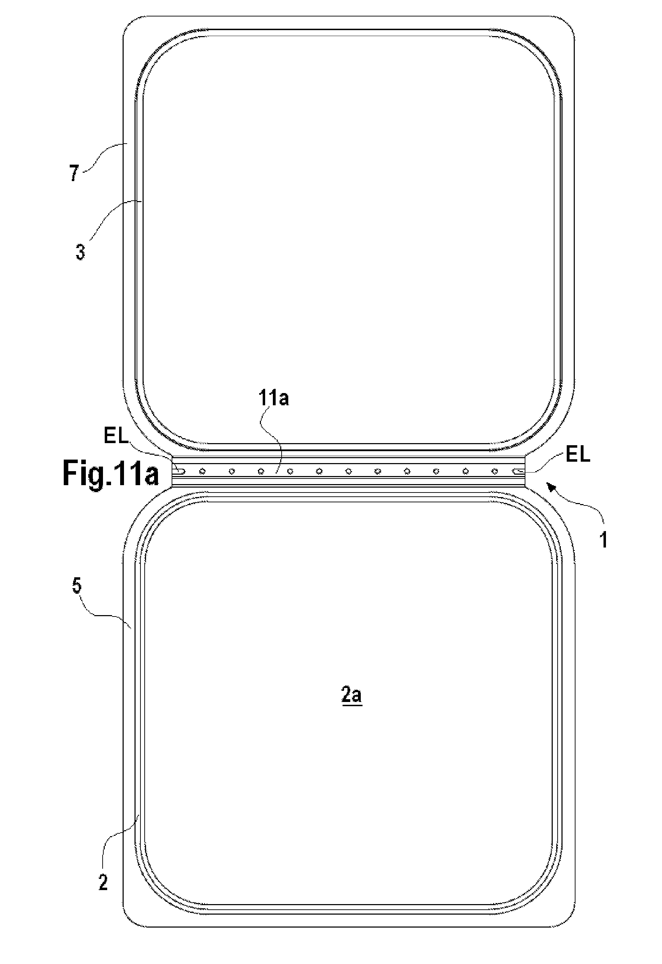

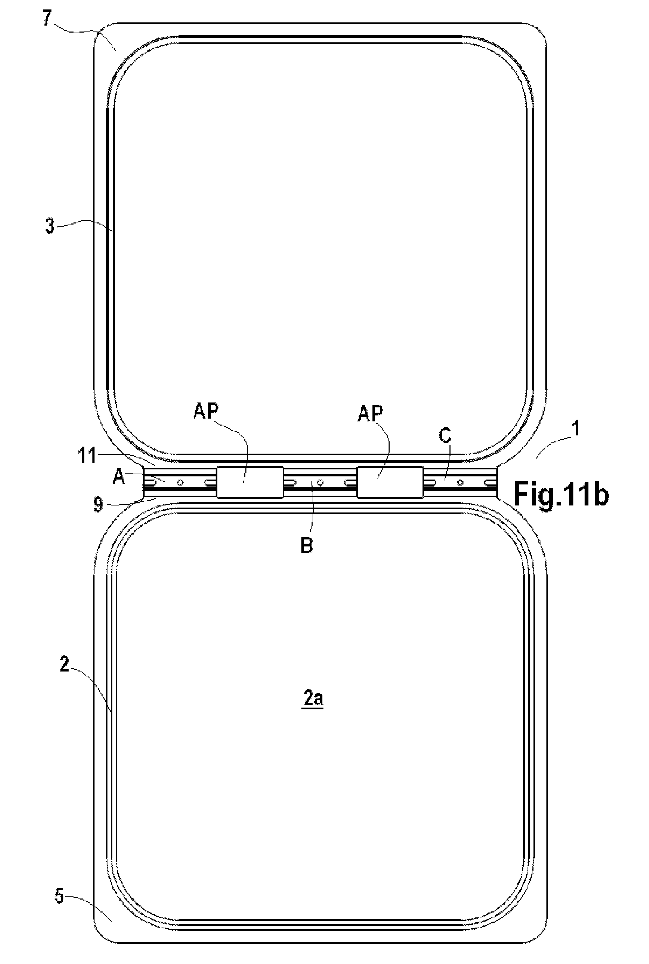

It will be noted that, in the case of laser welding (Figures 8a to 9d), the coupler group instead comprises a laser generator 39 of any suitable type, mounted in the work station 21 atop the approaching or superimposition zone, designed to weld the edges 9a and 11a of a container 2 and its respective cover 3 both in the case where they are arranged facing each other (Figures 8c and 8d) and if they are superimposed on each other (Figures 9a - 9d). The final tub 1 with overturnable cover will have a joint between the container body and the cover of continuous type, as illustrated in Fig. 10c, or with sections or spots of various configuration, as illustrated in Figs. 10a, 10b; 11a, 11b.

If the permanent engagement between the container body 2 and the cover 3 is of mechanical type, coupling means are provided for in the work station 21 with, for example, resiliently loaded punch of any suitable type - which will be further illustrated below.

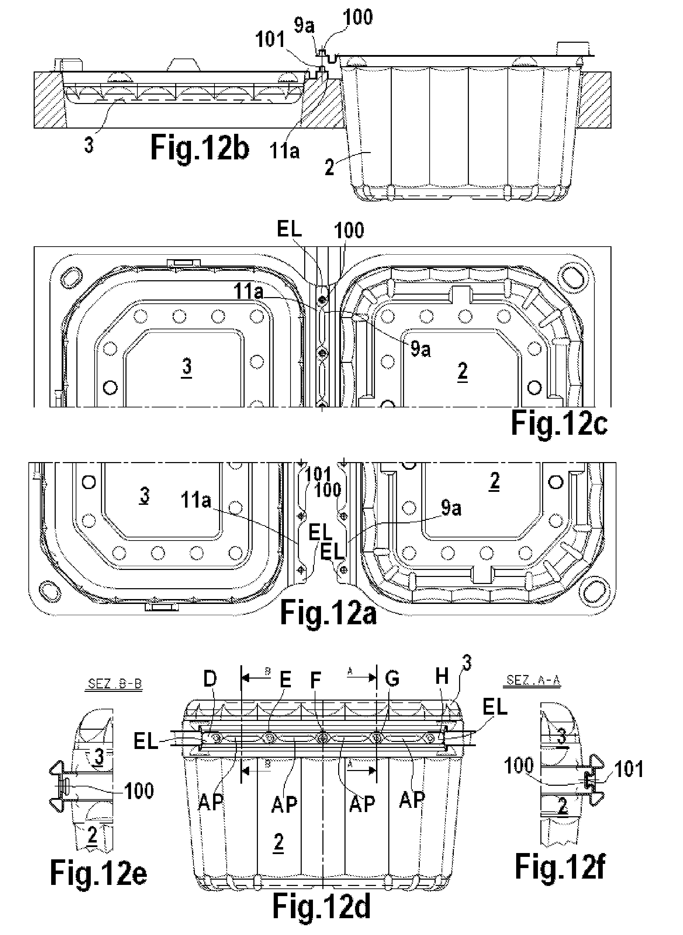

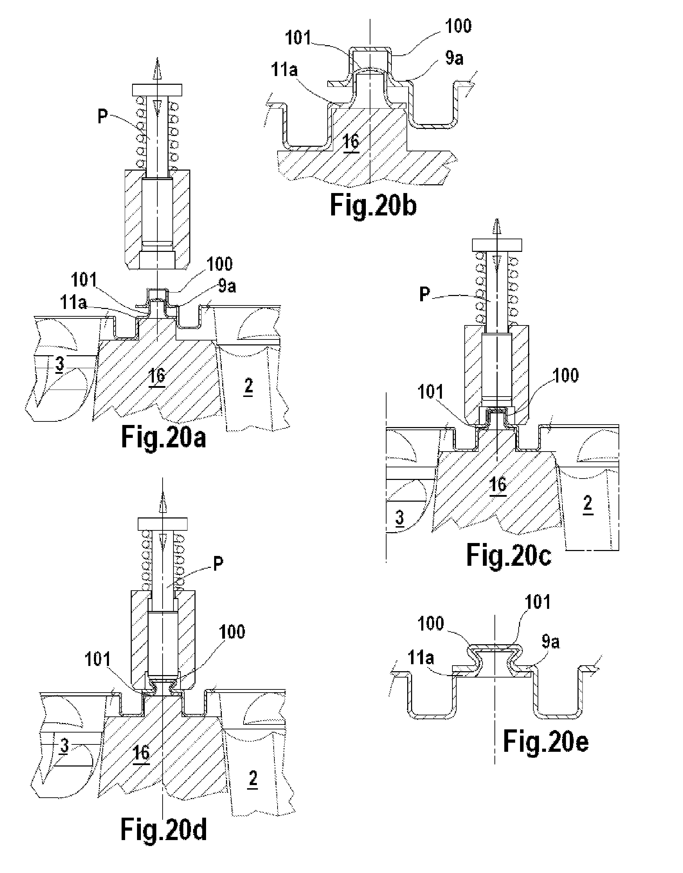

In order to carry out a mechanical coupling, the container body 2 and its respective cover 3 advantageously have their respective terminal portions 9a and 11a preconfigured in a complementary manner, typically for the mutual engagement of male and female type, as is shown in Figures 12a to 12f, 17a to 17e and 20a to 20e. With particular reference to Figure 12b, it will be noted that a container body 2 can be configured along at least one terminal portion section 9a thereof so as to have a plurality of female blind cavities 100 of any cross section, e.g. circular, whereas its respective cover is correspondingly configured along at least one section of its terminal portion 11a with male projections 101, of cross section slightly less than that of the respective blind cavities 100, such that the projections 101 of the cover 3 are accurately insertable in respective cavities 100 of the container 2. Once a projection 101 is seated in a respective cavity 100, it is deformed by being crushed by the punch element P, with a suitably configured head.

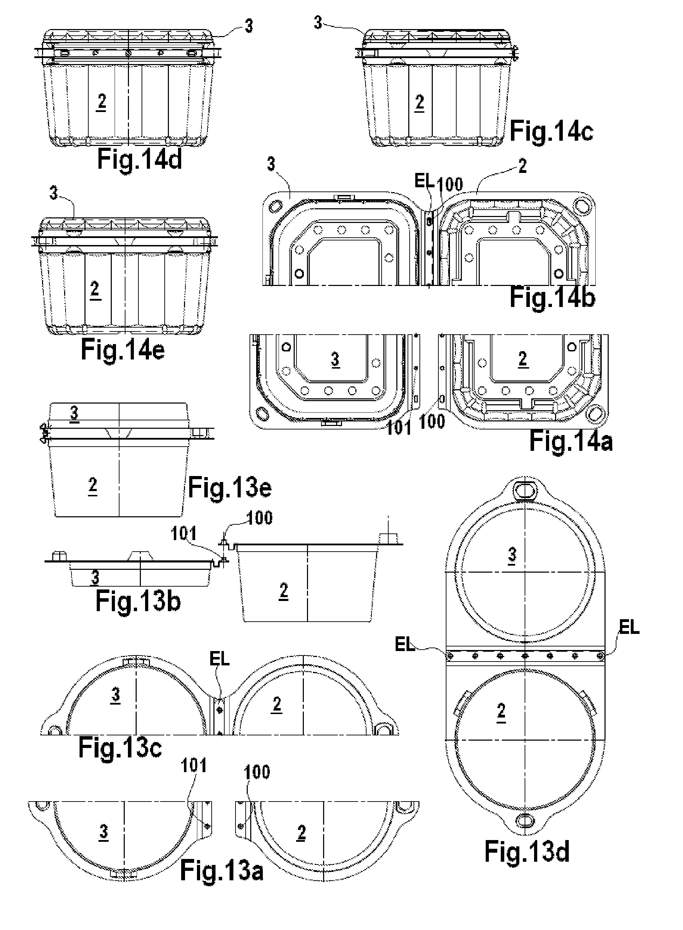

Figures 13a to 14d show container bodies 2 and covers 3 having plan cross section substantially rectangular or circular and configured with cavities 100 and projections 101 having cross section with different configuration, such as ellipse-like, as illustrated in Figs. 14a and 14b, or polygonal, star-like or the like.

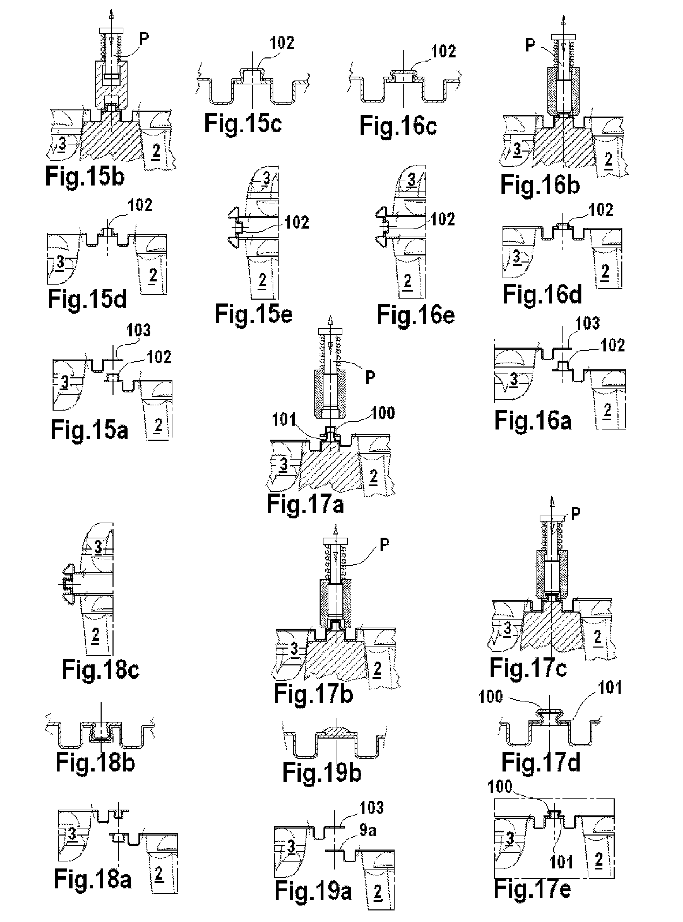

According to another variant of tub 1 according to the present invention, the container body 2, on its terminal portion 9a, has a plurality of blind projections 102, preferably aligned and with uniform circular cross section (Figure 16a), or increasing cross section (Figure 15a) or a cross section decreasing starting from the terminal portion 9a; whereas in the terminal portion 11a of its respective cover 3, corresponding through openings 103 are made, e. g. circular holes, for the insertion of the projections 102 therein.

If the cross section of the projections 102 decreases towards the terminal portion 9a (Figure 15a), the openings 103 in the cover will be provided with size such to ensure that the projections 102 are snap-insertable therein due to the action of one or more suitable punch elements P, with suitably configured heads.

If the cross section of the tubular projections 102 is uniform (Figure 16a), permanent engagement between the cover and the container can be obtained through the use of one or more pressure tools, e.g. each formed by an resiliently loaded punch with adjustable stroke and with suitably-configured head, e.g. with a groove having a cross section slightly greater than the external bulk of the projection(s) 102. The action of the punch also causes a transverse deformation or crushing of the projection 102, which thus remains permanently engaged in its respective housing opening 103.

According to a further variant of the present invention as illustrated in Figures 19a and 19b, the container body 2 has its own terminal portion 9a non-preconfigured, while in that 11a of its respective cover 3, a plurality of through openings are made, e.g. circular or rectangular and aligned with each other. Permanent coupling between the container body 2 and the cover 3 can be achieved with the provision of additional filler, e.g. any suitable glue, applied at the through openings in the cover.

Optionally, as seen in Figures 18a and 18b, the blind cavities 100 on the terminal portion 9a can be obtained turned towards the bottom 2a of the container body, and, correspondingly, the projections 101 of the cover 3 can be extended towards the top of the cover. With this configuration, with tub 1 closed, the cavities 100 will be projecting outside the tub, but will not hinder the stacking operations of the tubs.

As was previously anticipated, the coupling between the container body 2 and the cover 3 according to the present invention can advantageously affect the entire length of the terminal portions 9a and 11a (see Figure 10c which illustrates the coupling by welding and Figure 14d regarding a type of mechanical coupling). Optionally, a permanent coupling can also be made only along some sections of the terminal portions 9a and 11a, as is illustrated in Figures 10a, 10b and 11a, regarding the coupling by welding, and in Figures 13a - 14e, which show types of mechanical coupling between the container body 2 and its cover 3. More preferably, when intermittent permanent coupling is provided, the terminal portions 9a and 11a are firmly coupled at their ends EL. This is done in order to prevent the ends of the terminal portions 9a and 11a from being deformed and thus obstructing subsequent correct packing of the tubs.

It will be noted that, unlike the coupling by welding, the mechanical coupling makes it possible to permanently couple container bodies and covers that are made of different materials. For example, the container body 2 can be made of thermoformable plastic material and the cover 3 can be made of cardboard or plasticized or non-plasticized card material, so as to obtain a diversified structure, since it can be made in multiple colors and/or materials in order to meet current market needs.

It will be also appreciated that the plant above described for carrying out the coupling process between the container body and the cover involves only four working stations and that the respective process is, thus, easier and less time-consuming than those of the prior art.

The above-described process and plant are susceptible to numerous modifications and variations within the protection scope as defined by the tenor of the claims.

Thus, for example, the terminal portions 9a and 11a of the container body 2 and its cover 3 can be obtained in interrupted sections, as is illustrated in Figures 11b and 12d. In such Figures, the terminal portion 9a of the container body and 11a of the cover 3 are respectively formed by three and five separate sections (A, B, C in Figure 11b and D, E, F, G and H in Figure 12d). With one such configuration, the tub 1 will respectively delimit two and four through openings AP at the joint section between the container 2 and the cover 3. This embodiment type will allow, among other things, an advantageous savings of raw material necessary for producing the container bodies, in addition to an increased aeration area of the contents, if necessary.

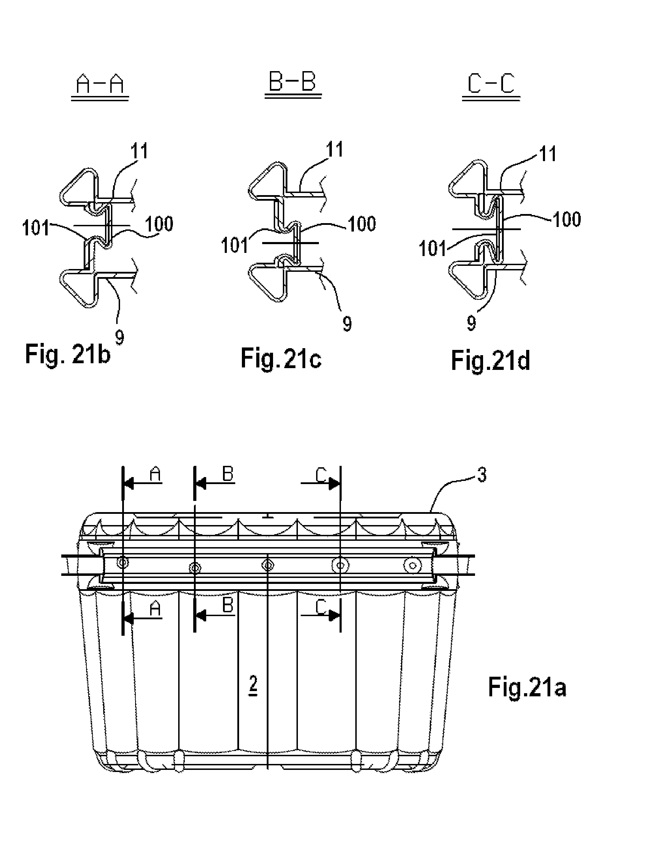

Moreover, as illustrated in Figures 21a to 21d, the projections 101 from the cover 3 and their respective blind cavities 100 in the container 2 can be shaped and provided at the terminal portion 9a, 11a of a respective appendage or lip 9, 11, in such a manner that, when the tub is in its closed position, the cavities 100 come into contact with one or both terminal portions 9, 11 of the tub to act as a spacer component in order to ensure that a suitable gap is permanently maintained between the contained body 2 and the cover 3 so that ventilation of the material kept in the tub is ensured in any circumstances. The same can be true also for the tubular projections 102 and their respective housing openings 103 of Figures 15a-15e.

## Claims

1. A process for obtaining a tub with overturnable cover, particularly for packaging food products, comprising the following operating steps:
- prearranging at least one container body (2) obtained from a first laminar material, and having at least one side wall (4) with a flanged edge (5) provided with at least one appendage or lip (9);
- prearranging at least one cover body (3) obtained from a second laminar material and having a shape complementary to that of said at least one container body (2), said cover body (3) being provided with at least one appendage or lip (11) on an externally flanged end (7) thereof; and
- permanently connecting at least one section of said at least appendage or lip (9) of said at least one container body (2) with at least one section of a respective appendage or lip (11) of said cover body (3).

2. A process according to claim 1, **characterized in that** the permanent connection between at least one section of said at least appendage or lip (9) of said at least one container body (2) with at least one section of a respective appendage or lip (11) of said cover body (3) is obtained by intermittent or spot welding.

3. A process according to claim 2, **characterized in that** said welding is carried out through ultrasound.

4. A process according to claim 2, **characterized in that** said welding is carried out by means of a laser beam.

5. A process according to claim 1, **characterized in that** the permanent connection between at least one section of said at least appendage or lip (9) of said at least one container body (2) with at least one section of said respective appendage or lip (11) of said cover body (3) is obtained by mechanical coupling obtained in sections or spots.

6. A process according to claim 5, **characterized in that** said permanent mechanical coupling is obtained by means of pressure means (P).

7. A process according to claim 1, **characterized in that** said permanent connection between at least one section of said at least appendage or lip (9) of said at least one container body (2) with at least one section of said respective appendage or lip (11) of said cover body (3) comprises a filler material.

8. A process according to claim 7, **characterized in that** said filler material comprises a glue.

9. A process according to any claim 1 to 8, **characterized in that** it comprises mutual approaching or superimposition of a respective terminal portion (9a, 11a) of said at least one appendage or lip (9, 11) of said at least one container body (2) and a respective cover (3) before they are permanently connected together.

10. A plant for obtaining a tub with an overturnable cover, particularly for the packaging of food products, obtained according to the process as claimed in any claim 1 to 9, comprising:
- first support means for at least one container body (2) or cover body (3),
- second support means for at least one cover body (3) or container tub body (2),
- said first and second support means being designed to be arranged, in use, so as to bring at least one section of said at least one appendage or lip (9) of said container body (2) close to a respective section of said at least appendage or lip (11) of said cover body (3), and
- permanent connection means (35, 36, 39, P) between at least one section of said at least appendage or lip (9) of said at least one container body (2) with said respective section of said at least one appendage or lip (11) of said cover body (3).

11. A plant according to claim 10, **characterized in that** said first and second support means comprise at least one loading template or jig (16).

12. A plant according to claim 11, **characterized in that** said loading jig (16) comprises at least one pair of housing seats (17a, 17b) and has, at a section thereof between said housing seats (17a, 17b), at least one receiving recess (16a, 16b) suitable for receiving a respective grooved projection (10, 12) at least one appendage or lip (9) of said container body (2) at least appendage or lip (11) of said cover body (3).

13. A plant according to any claim 10 to 12, **characterized in that** it comprises positioning means for said at least one container body (2) and respective cover (3) in a respective housing seat (17), said positioning means being provided upstream of said permanent connection means (35, 36, 39 and P) and comprising at least one pressure element (34).

14. A plant according to claim 10 and 13, **characterized in that** said permanent connection means comprise a welding group (36).

15. A plant according to claim 14, **characterized in that** said welding group (36) is selected from an ultrasound welding group and a laser welding group.

16. A tub with an overturnable cover, particularly suitable for packaging foods, when obtained with the process as claimed in any claim 1 to 9 and comprising:
- a container body (2) having a bottom (2a) and a side wall (4) with a flanged peripheral edge (5) provided with at least one appendage or lip (9);
- a cover (3) having a flanged peripheral edge (7) with at least one appendage or lip (11) and arranged to close the container (2);
**characterized in that**
said at least one appendage or lip (9) of said at least one container body (2) and said appendage or lip (11) of said at least one cover (3) have at least one terminal portion (9a, 11a), the terminal portion(s) (9a) of said at least one container body (2) being designed to be permanently engaged r with the terminal portion(s) (11a) of said at least one cover (3).

17. A tub according to claim 16, **characterized in that** the terminal portions (9a, 11a) of said at least one appendage or lip (9,11) of said container body (2) and said cover (3) are provided with coupling means of (102, 103, 100, 101) such that, when said tub is in the closed position, said coupling means (102, 103, 100, 101) touch at least one appendage or lip (9,11), thus acting as spacer means between sad container body (2) and said cover (3).

18. A tub according to claim 17, **characterized in that** said coupling means (102, 103, 100, 101) are of the male-female type.
